# EUROPÄISCHE PATENTSCHRIFT

(11) **EP 2 982 888 B1**
(45) Veröffentlichungstag und Bekanntmachung des Hinweises auf die Patenterteilung: **14.02.2018**
(21) Anmeldenummer: 14002715.2
(22) Anmeldetag: 04.08.2014
(51) Int. Cl.: F16J 3/04, F16K 41/10

(54) **Membranbalg**
Membrane bellows
Soufflet à membrane

(43) Veröffentlichungstag der Anmeldung: 10.02.2016
(73) Patentinhaber: VAT Holding AG, 9469 Haag (CH)
(72) Erfinder: Tatzreiter, Wolfgang, 6850 Dornbirn (AT)
(74) Vertreter: Hofmann, Ralf U.

(56) Entgegenhaltungen:
- US-A- 2 657 075
- US-A- 4 183 289
- US-A1- 2002 175 480

## Beschreibung

Die Erfindung bezieht sich auf einen Membranbalg mit einer Mehrzahl von Membranen mit äußeren Rändern und inneren Rändern, wobei in Richtung der Längsmittelachse des Membranbalgs aufeinanderfolgende Membrane wechselweise im Bereich ihrer inneren Ränder und im Bereich ihrer äußeren Ränder miteinander verschweißt sind, wobei der Membranbalg im Weiteren mindestens ein Führungsteil zur Führung auf der äußeren Oberfläche einer eine innere Durchgangsöffnung des Membranbalgs durchsetzenden Stange aufweist. Im Weiteren bezieht sich die Erfindung auf einen Membranbalg mit einer Mehrzahl von Membranen mit äußeren Rändern und inneren Rändern, wobei in Richtung der Längsmittelachse des Membranbalgs aufeinanderfolgende Membrane wechselweise im Bereich ihrer inneren Ränder und im Bereich ihrer äußeren Ränder miteinander verschweißt sind, wobei der Membranbalg im Weiteren mindestens ein Führungsteil zur Führung auf der inneren Oberfläche eines den Membranbalg umgebenden Rohrs aufweist.

Membranbälge werden in der Regel als flexibles Dichtungselement eingesetzt, um in einer Anwendung verschiedene Druckbereiche zu trennen. So werden Membranbälge beispielsweise für Vakuumdurchführungen von Vakuumventilen eingesetzt, wobei der Membranbalg die Antriebsstange des Ventils umhüllt und beim Öffnen und Schließen des Ventils den Vakuumbereich vom Atmosphärenbereich trennt. Neben Anwendungen für Vakuumdurchführungen zur Bewegungseinleitung ins Vakuum können Membranbälge beispielsweise als Kompensatoren zur Aufnahme von Wärmeausdehnungen oder Montagetoleranzen eingesetzt werden. Eine weitere Anwendung besteht beispielsweise in der Schwingungsentkopplung in einem Vakuumsystem, z.B. zwischen einer Vakuumpumpe und einem Messgerät.

Membranbalge bestehen aus wechselseitig an ihren äußeren und inneren Rändern miteinander verschweißten Membranen. Bei der Herstellung werden zunächst Membranpaare an ihren inneren Rändern miteinander verschweißt und in der Folge die Membranpaare aneinander gereiht und an ihren äußeren Rändern miteinander verschweißt. Mit solchen Membranbälgen ist ein Hub in axialer und/oder lateraler und/oder angularer Richtung möglich.

Neben Membranbälgen sind Wellbälge bekannt, bei denen Rohre balgartig verformt werden, wodurch eine Beweglichkeit erreicht wird. Spezielle Ausbildungen von Wellbälgen gehen beispielsweise aus der US 4,650,160 A und GB 2 062 132 A hervor.

Beim Einsatz von Membranbälgen kommt es meist zu Druckdifferenzen zwischen dem Innenraum und der Außenseite des Membranbalgs, wobei der Druck im Inneren des Membranbalgs kleiner oder größer sein kann als der außerhalb des Membranbalgs vorliegende Druck sein kann. Aufgrund von solchen Druckdifferenzen (insbesondere wenn im Inneren des Membranbalgs ein höherer Druck vorherrscht als außerhalb des Membranbalgs) und/oder durch die Schwerkraft kann es aufgrund der geringen Seitensteifigkeit des Membranbalgs zu einem mehr oder weniger starken seitlichen Ausknicken des Membranbalgs kommen, wenn der Membranbalg ausreichend lang ist. Beispielsweise kann sich hierdurch der Membranbalg in Bereichen der Verschweißungen der inneren Ränder der Membrane an eine durch die innere Durchgangsöffnung des Membranbalgs verlaufende Stange (z.B. Antriebsstange eines Vakuumventils) anlegen. Bei einer Verschiebung der Stange kommt es somit zu einer Reibung der inneren Ränder der Membrane auf der Stange, was zu einem Verschleiß der Schweißnähte zwischen der inneren Ränder der Membrane führt, wodurch im Laufe der Zeit Beeinträchtigungen der Festigkeit dieser Schweißnähte und Lecks auftreten können.

Es wurden daher bereits Führungsteile zur Führung des Membranbalgs in mittleren Bereichen seiner Längserstreckung eingesetzt. Ein Membranbalg der eingangs genannten Art geht aus der US 2002/0175480 A1 hervor. Aus dieser Schrift gehen ringförmige Führungsteile (=Gleitringe) mit nach außen vorstehenden Vorsprüngen hervor, die in den Raum zwischen benachbarten Membranen des Membranbalgs ragen und das Führungsteil formschlüssig gegen eine Verschiebung in axialer Richtung des Membranbalgs festlegen. Die inneren Ränder der beiden Membrane, zwischen denen ein jeweiliger Gleitring gehalten ist, liegen auf der äußeren Mantelfläche des Gleitrings auf. Im zusammengedrückten Zustand des Membranbalgs sind auch die inneren Ränder von benachbarten Membranen über der äußeren Mantelfläche des Gleitrings angeordnet. Ein gewisser Nachteil bei solchen Gleitringen besteht darin, dass die Membrane, zwischen denen ein jeweiliger Gleitring gehalten ist, nicht aneinander angelegt werden können. Der mögliche axiale Hub des Membranbalgs wird dadurch verringert. Zudem besitzen solche Gleitringe im Vergleich zu den Membranen eine relativ große Masse, wodurch es zu zusätzlichen dynamischen Belastungen der Membrane kommt. Im in vertikaler Richtung eingebauten Zustand kommt es durch die Masse der Gleitringe auch zu einer unterschiedlichen Ausdehnung des Membranbalgs unterhalb und oberhalb eines jeweiligen Gleitrings, was sich im Falle des Einsatzes von mehreren Gleitringen verstärkt und ebenfalls zu höheren Belastungen des Membranbalgs führt.

Beim aus der CN 203 363 518 U bekannten Membranbalg ist zwischen zwei Abschnitten des Membranbalgs ein massiver Abstützring eingeschweißt. Es kommt hier zu ähnlichen Problemen wie zuvor beschrieben.

Die JP 2013221596 A zeigt einen Balg mit scherenförmig ausgebildeten Führungsgliedern. Es handelt sich um eine aufwendige Konstruktion.

Aus der US 4 183 289 A geht ein Balg mit einer Einrichtung zur Begrenzung des Auseinanderziehens des Balgs hervor. Es sind hierbei ringförmige Plättchen vorgesehen, deren äußere Ränder zwischen benachbarten Membranen des Balgs liegen und die im Bereich ihrer radial inneren Ränder mit hülsenförmigen Elementen verbunden sind, an deren Enden Anschlagfortsätze angeordnet sind.

Es ist auch bekannt, Membranbalge bei implantierbaren Infusionspumpen zur Abgabe eines Medikaments einzusetzen. Das Medikament befindet sich im Inneren des Membranbalgs, der an der Unterseite durch einen Boden und an der Oberseite durch eine Basisplatte der Infusionspumpe geschlossen ist. Durch einen auf den Boden wirkenden Druck wird der Membranbalg komprimiert und das Medikament dosiert. Um das verbleibende Volumen des Membranbalgs und damit die verbleibende Medikamentenmenge zu bestimmen, werden elektronische Resonanzkreise eingesetzt, welche eine Spule im Boden des Membranbalgs umfassen. Zur Erhöhung der Sensitivität eines Resonanzkreises zur Bestimmung des Volumens des Membranbalgs wird in der EP 2 177 792 A1 eine zusätzliche mittlere Platte des Membranbalgs eingesetzt, welche mindestens eine Öffnung zum Durchtritt des Medikaments aufweist. Zur Befestigung der mittleren Platte dient ein Haltering mit kreuzförmig angeordneten Haltearmen, die in einem zentralen Verbindungsbereich miteinander verbunden sind und mit denen die Zwischenplatte verschweißt ist. Der Haltering liegt im Bereich seines äußeren Randes zwischen den äußeren Rändern von zwei Membranen und ist mit diesen verschweißt. Eine Führung gegen ein seitliches Ausknicken des Membranbalgs ist bei einer solchen Einrichtung schon aufgrund der Kürze des Membranbalgs nicht erforderlich.

Aus der US 2,657,075 A geht ein doppelwandiger Membranbalg mit Paaren von äußeren Membranen sowie Paaren von inneren Membranen hervor, wodurch geschlossene Lufträume zwischen den äußeren Membranen und inneren Membranen ausgebildet werden.

Aufgabe der Erfindung ist es einen verbesserten Membranbalg der eingangs genannten Art bereitzustellen, bei welchem einem seitlichen Ausknicken durch mindestens ein Führungsteil entgegengewirkt wird. Erfindungsgemäß gelingt dies durch einen Membranbalg mit den Merkmalen des Anspruchs 1 oder 2.

Gemäß der Erfindung ist das Führungsteil aus Blech ausgebildet. Gemäß einer ersten Variante der Erfindung weist der Membranbalg mindestens ein Führungsteil mit einem Halterungsabschnitt auf, der im Bereich seines äußeren Randes zwischen benachbarten Membranen des Membranbalgs liegt und mit diesen benachbarten Membranen verschweißt ist. Der Halterungsabschnitt nähert sich ausgehend von seinem äußeren Rand der Längsmittelachse des Membranbalgs an und überragt die inneren Ränder der benachbarten Membrane in Richtung zur Längsmittelachse des Membranbalgs und ist mit einem näher als die inneren Ränder dieser benachbarten Membrane bei der Längsmittelachse des Membranbalgs liegenden Führungsabschnitt zur Führung auf der äußeren Oberfläche einer die innere Durchgangsöffnung des Membranbalgs durchsetzenden Stange verbunden, wobei der Führungsabschnitt die Längsmittelachse des Membranbalgs hülsenförmig umgibt.

Gemäß einer zweiten Variante der Erfindung liegt der Halterungsabschnitt des mindestens einen Führungsteils im Bereich seines inneren Randes zwischen benachbarten Membranen des Membranbalgs und ist mit diesen benachbarten Membranen verschweißt. Ausgehend von seinem inneren Rand entfernt sich der Halterungsabschnitt von der Längsmittelachse des Membranbalgs und überragt die äußeren Ränder der benachbarten Membrane in eine von der Längsmittelachse des Membranbalgs wegweisende Richtung und ist mit einem weiter als die äußeren Ränder dieser benachbarten Membrane von der Längsmittelachse des Membranbalgs entfernt liegenden Führungsabschnitt zur Führung auf der inneren Oberfläche eines den Membranbalg umgebenden Rohrs verbunden, wobei der Führungsabschnitt die Längsmittelachse des Membranbalgs hülsenförmig umgibt.

Durch die Ausbildung des mindestens einen Führungsteils aus Blech weist dieses eine geringe Masse auf, sodass es durch die Ausbildung des Membranbalgs mit einem oder mehreren solchen Führungsteilen zu keinen maßgeblichen höheren Belastungen des Membranbalgs durch die zusätzliche Masse des mindestens einen Führungsteils kommt. Zudem kann eine zumindest annähernd vollständige Komprimierbarkeit des Membranbalgs erhalten werden. Ein erfindungsgemäßer Membranbalg ist hierbei einfach herstellbar.

Durch die Erfindung kann ein Membranbalg mit einer Führung gegen ein seitliches Ausknicken bereitgestellt werden, der eine hohe Lebensdauer aufweist.

Die Dicke (=Materialstärke) des Halterungsabschnitts des Führungsteils beträgt weniger als die fünffache Dicke, besonders bevorzugt weniger als die dreifache Dicke, der Membranen, zwischen denen der Halterungsabschnitt des Führungsteils angeordnet ist. Günstigerweise wird der Halterungsabschnitt von einem Membranteil gebildet, welches die gleiche Dicke wie die Membranen aufweist, zwischen denen er liegt, oder von zwei solchen aneinander anliegenden Membranteilen.

### (weiter auf Seite 6 der ursprünglichen Beschreibung)

Die Dicke (=Materialstärke) des Führungsabschnitts des Führungsteils beträgt vorzugsweise weniger als die fünffache Dicke, besonders bevorzugt weniger als die dreifache Dicke, der Membranen, zwischen denen der Halterungsabschnitt liegt, mit welchem der Führungsabschnitt verbunden ist. Günstigerweise kann der Führungsabschnitt die gleiche Dicke wie diese Membrane aufweisen.

In einer vorteilhaften Ausführungsform der Erfindung ist der Führungsabschnitt mit dem Halterungsabschnitt einstückig ausgebildet. Das Führungsteil kann hierbei vorteilhafterweise durch Tiefziehen eines Blechteils ausgebildet werden. Wenn der Halterungsabschnitt von zwei aneinander anliegenden Membranteilen gebildet wird, so sieht eine mögliche Ausführungsform vor, dass das Führungsteil zwei Abschnitte umfasst, von denen jeder materialeinstückig mit einer der Lagen des Halterungsabschnittes ausgebildet ist. Das Führungsteil kann hierbei vorteilhafterweise durch Tiefziehen von zwei Blechstücken gebildet werden, die zusammen zwischen den benachbarten Membranen des Membranbalgs eingesetzt und mit diesen verschweißt werden.

In einer anderen möglichen Ausführungsform kann der Führungsabschnitt mit dem Halterungsabschnitt verschweißt sein. Der Halterungsabschnitt kann hierbei rohrförmig ausgebildet sein und mit einem inneren Rand des von einem Membranteil gebildeten Halterungsabschnitts verschweißt sein.

Der Führungsabschnitt ist vorteilhafterweise von den inneren Rändern der Membrane beabstandet, wobei der Abstand vorzugsweise mindestens 3 mal die Dicke (=Materialstärke) des Führungsabschnitts beträgt.

Die Dicke (=Materialstärke) des Führungsabschnitts liegt vorzugsweise im Bereich von 0,07 bis 0,6mm, wobei ein Bereich von 0,1 bis 0,3mm besonders bevorzugt ist.

Die Dicke (=Materialstärke) des Halterungsabschnitts des Führungsteils liegt vorzugsweise im Bereich von 0,07 bis 0,6mm, wobei ein Bereich von 0,1 bis 0,3mm besonders bevorzugt ist.

Beispielsweise ist das mindestens eine Führungsteil aus Stahl ausgebildet. Auch eine Ausbildung aus anderen Metallen ist möglich, z.B. aus einer Nickel-Legierung oder Titan.

Wenn im Rahmen dieser Schrift von "innen" und "außen" die Rede ist, so ist die auf die radiale Lage bezüglich der Längsmittelachse des Membranbalgs bezogen, d.h. ein weiter innen liegendes Teil weist einen geringeren Abstand von der Längsmittelachse als ein weiter außen liegendes Teil auf.

Weitere Vorteile und Einzelheiten der Erfindung werden im Folgenden anhand der beiliegenden Zeichnung erläutert. In dieser zeigen:
Fig. 1 einen Abschnitt eines Membranbalgs gemäß einem ersten Ausführungsbeispiel der Erfindung in Seitenansicht;
Fig. 2 einen Schnitt entlang der Linie AA von Fig. 1;
Fig. 3 ein Detail B von Fig. 2;
Fig. 4 und 5 eine Membran des Membranbalgs in Ansicht und in Schrägsicht;
Fig. 6 eine Seitenansicht der Membran;
Fig. 7 ein Führungsteil des Membranbalgs in Ansicht;
Fig. 8 einen Schnitt entlang der Linie CC von Fig. 7;
Fig. 9 und 10 Schrägsichten des Führungsteils aus verschiedenen Blickrichtungen;
Fig. 11 eine Einrichtung umfassend einen Membranbalg gemäß dem ersten Ausführungsbeispiel der Erfindung mit beidseitig daran angebrachten Anschlussstücken sowie eine die innere Durchtrittsöffnung des Membranbalgs durchsetzende Stange;
Fig. 12 einen Schnitt entlang der Linie DD von Fig. 11;
Fig. 13 ein Detail E von Fig. 12;
Fig. 14 eine Seitenansicht zweier an ihren inneren Rändern verschweißten Membranpaare und eines dazwischen angeordneten Führungsteils, entsprechend einem Zwischenstadium bei der Herstellung des Membranbalgs;
Fig. 15 einen Schnitt entlang der Linie FF von Fig. 14;
Fig. 16 die Teile von Fig. 14 in einer Schrägsicht;
Fig. 17 einen Schnitt analog Fig. 2 für ein zweites Ausführungsbeispiel der Erfindung;
Fig. 18 ein Detail G von Fig. 17;
Fig. 19 einen Schnitt analog Fig. 8 des Führungsteils entsprechend dem zweiten Ausführungsbeispiel der Erfindung;
Fig. 20 eine Seitenansicht eines Führungsteils eines Membranbalgs gemäß einem dritten Ausführungsbeispiel der Erfindung;
Fig. 21 einen Schnitt entlang der Linie HH von Fig. 20;
Fig. 22 und 23 Schrägsichten des Führungsteils aus verschiedenen Blickrichtungen;
Fig. 24 eine Einrichtung umfassend einen Membranbalg gemäß einem vierten Ausführungsbeispiel der Erfindung mit beidseitig daran angebrachten Anschlussstücken und einem den Membranbalg umgebenden Rohr;
Fig. 25 einen Schnitt entlang der Linie II von Fig. 24;
Fig. 26 ein vergrößertes Detail J von Fig. 25.

Die Figuren weisen verschiedene Maßstäbe auf. In den verschiedenen Ausführungsbeispielen sind einander entsprechende oder analoge Teile mit den gleichen Bezugszeichen bezeichnet.

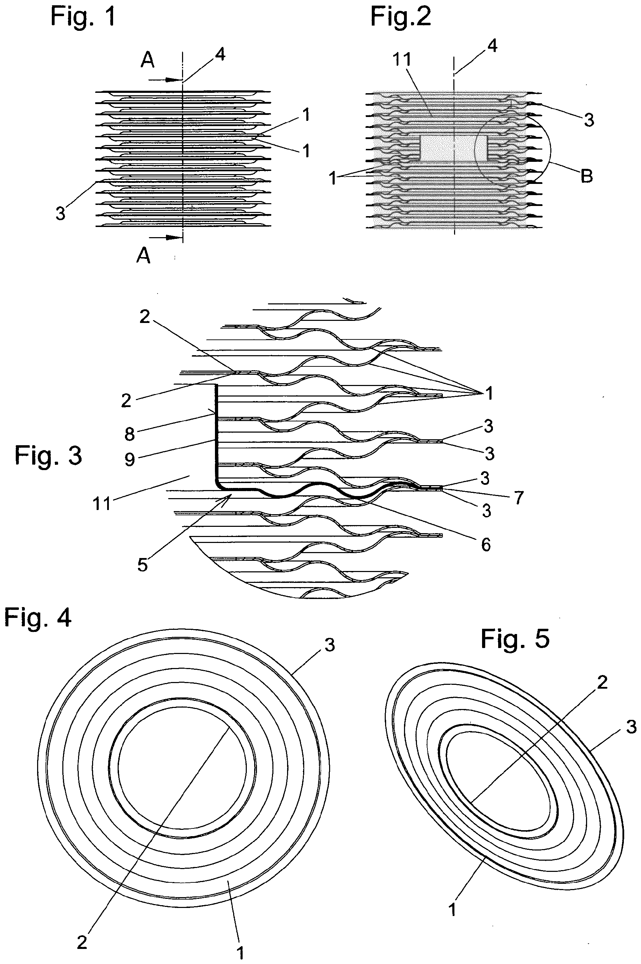

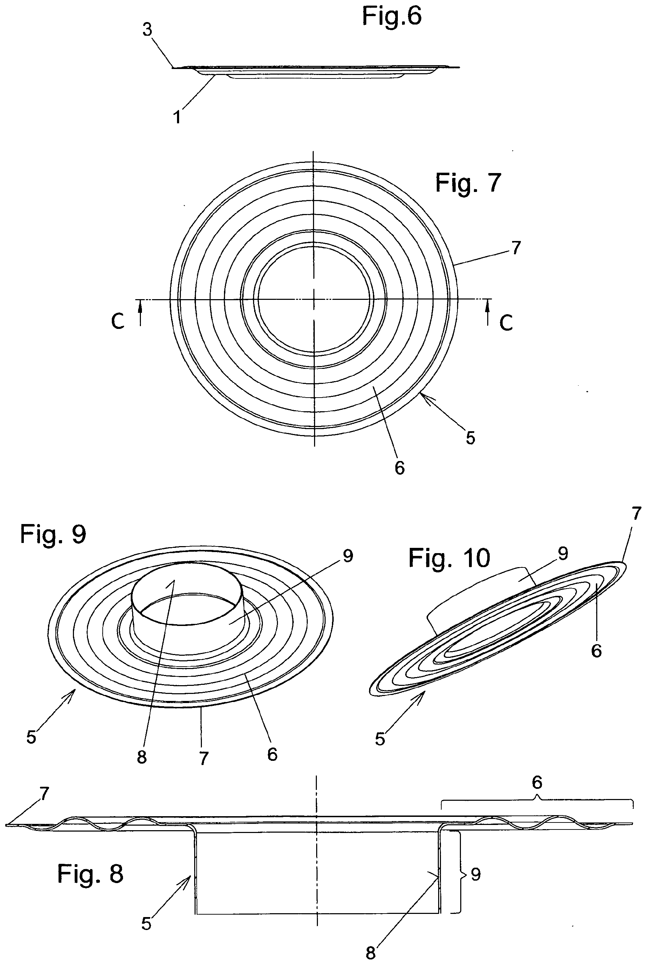

In den Fig. 1 bis 10 ist ein Abschnitt der Längserstreckung eines erfindungsgemäßen Membranbalgs gemäß einem ersten Ausführungsbeispiel dargestellt. Der Membranbalg umfasst eine Mehrzahl von Membranen 1, welche auch als Membranscheiben oder Ringmembrane bezeichnet werden können. Eine jeweilige Membran besitzt einen inneren Rand 2 und einen äußeren Rand 3. Die inneren und äußeren Ränder 2, 3 der Membrane weisen Kreisformen auf. Im gezeigten Ausführungsbeispiel besitzen alle Membrane gleiche Radien ihrer inneren Ränder und gleiche demgegenüber größere Radien ihrer äußeren Ränder, wie dies bevorzugt ist. Die Membrane sind insbesondere rotationssymmetrisch ausgebildet.

Günstigerweise sind die Membrane 1 ohne einwirkende äußere Kräfte gewellt und leicht kegelig ausgebildet, wie dies bekannt ist. Die Membrane 1 sind im Ausführungsbeispiel alle identisch ausgebildet.

Die Membrane 1 bestehen aus Blech mit einer Dicke, die vorzugsweise im Bereich von 0,07 bis 0,3mm, vorzugsweise 0,09 bis 0,2mm liegt.

Beispielsweise bestehen die Membrane 1 aus Stahlblech. Auch eine Ausbildung aus anderen Metallen ist möglich, z.B. aus einer Nickel-Legierung oder Titan.

In Richtung der Längsmittelachse 4 des Membranbalgs aufeinanderfolgende Membrane 1 sind abwechselnd an ihren inneren Rändern 2 und äußeren Rändern 3 miteinander verschweißt, wodurch sich eine ziehharmonikaartige Ausbildung ergibt.

Die Ausbildung des Membranbalgs ist soweit bisher beschrieben bekannt.

Im in den Fig. 1 bis 3 gezeigten Abschnitt der Längserstreckung des Membranbalgs weist dieser im Weiteren ein Führungsteil 5 auf. Dieses ist ebenfalls aus Blech ausgebildet. Die Blechdicke (=Materialstärke) kann derjenigen der Membrane 1 entsprechen. Es kann auch ein Blech mit einer demgegenüber unterschiedlichen Dicke, beispielsweise größeren Dicke eingesetzt werden, wobei die Dicke dann vorzugsweise weniger als dreimal so groß, besonders bevorzugt weniger als doppelt so groß, wie die Dicke des Blechs der Membrane 1 ist.

Das Führungsteil 5 umfasst einen Halterungsabschnitt 6. Dieser liegt im Bereich seines äußeren Randes zwischen den äußeren Randbereichen von benachbarten, d.h. in Richtung der Längsmittelachse 4 aufeinanderfolgenden, Membranen 1 des Membranbalgs. Die aneinander anliegenden äußeren Ränder 3 dieser benachbarten Membrane 1 des Membranbalgs und des Halterungsabschnitts 6 sind miteinander verschweißt. Die Verschweißung kann in analoger Weise ausgebildet sein, wie die Verschweißungen der übrigen an ihren äußeren Rändern 3 miteinander verschweißten benachbarten Membrane 1 des Membranbalgs.

Ausgehend vom äußeren Rand 7 des Halterungsabschnitts 6, der auch den äußeren Rand des Führungsteils 5 darstellt, nähert sich der Halterungsabschnitt 6 in Richtung zu einer Führungsfläche 8 des Führungsteils 5 zunehmend der Längsmittelachse 4 des Membranbalgs an und überragt hierbei die inneren Ränder 2 der dem Führungsteil 5 benachbarten Membrane 1 (und im Ausführungsbeispiel auch aller übrigen Membrane 1 des Membranbalgs) in Richtung zur Längsmittelachse 4.

Die Führungsfläche 8 umgibt eine zentrale Öffnung des Führungsteils 5. Die zentrale Öffnung des Führungsteils 5 besitzt einen Durchmesser, der mindestens 80% des Durchmessers der zentralen Öffnungen der beidseitig des Halterungsabschnitts 6 des Führungsteils 5 liegenden Membrane 1 beträgt.

Im Bereich der radialen Erstreckung des Halterungsabschnitts 6, über welchen er (bezogen auf die radiale Richtung) zwischen den aufeinanderfolgenden Membranen 1 des Membranbalgs liegt, weist der Halterungsabschnitt 6 im Längsmittelschnitt durch den Membranbalg gesehen (vgl. insbesondere Fig. 2 und 3) eine zu den Membranen 1 derart korrespondierende Kontur auf, dass die Membrane 1 und der dazwischenliegende Halterungsabschnitt 6 im vollständig zusammengedrückten Zustand des Membranbalgs flächig aneinander anliegen.

Im Ausführungsbeispiel besitzt der Halterungsabschnitt 6 hierbei im Längsmittelschnitt gesehen (vgl. insbesondere Fig. 2, 3 und 8) einen welligen Verlauf, wobei die Längen und Höhen der Wellungen denjenigen der Wellungen der Membranen 1 entsprechen.

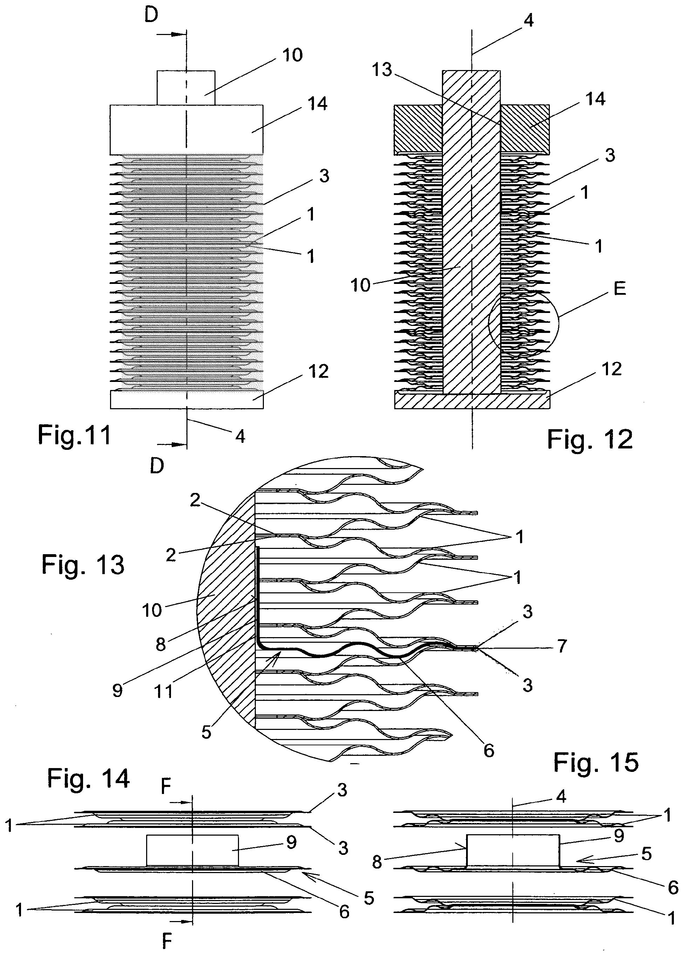

Der Halterungsabschnitt 6 ist in seinem die inneren Ränder der (benachbarten) Membrane 1 in Richtung zur Längsmittelachse 4 überragenden Bereich mit einem Führungsabschnitt 9 des Führungsteils 5 verbunden. Der Führungsabschnitt 9 weist somit einen geringeren Abstand von der Längsmittelachse 4 als die inneren Ränder 2 der Membrane 1 auf. Der Führungsabschnitt 9 dient zur Führung des Membranbalgs auf einer Stange 10, vgl. die weiter unten genauer beschriebenen Fig. 11 bis 13.

Die zur Längsmittelachse 4 weisende innere Oberfläche des Führungsabschnitts 9, welche die Führungsfläche 8 des Führungsteils 5 zur Führung des Membranbalgs gegenüber der Stange 10 bildet, ist im Ausführungsbeispiel zylindrisch. Das Führungsteil 5 ist im Ausführungsbeispiel also zylindermantelförmig ausgebildet.

Andere als zylindermantelförmige Ausbildungen sind aber denkbar und möglich. So könnte der Führungsabschnitt 9 beispielsweise im Längsmittelschnitt gesehen wellig ausgebildet sein. Auch könnte der Führungsabschnitt grundsätzlich in Umfangsrichtung um die Längsmittelachse 4 beabstandete Abschnitte aufweisen, sodass er keine geschlossene Hülse ausbildet. Eine rotationssymmetrische Ausbildung des Führungsteils 5 ist aber bevorzugt.

Der Führungsabschnitt 9 erstreckt sich bezogen auf die Richtung der Längsmittelachse 4 günstigerweise zumindest über eine Länge von 0,5cm.

Im Längsmittelschnitt gesehen weist das Führungsteil 5 in diesem Ausführungsbeispiel eine im Wesentlichen L-förmige Kontur auf ("im Wesentlichen L-förmig" bedeutet hier, dass auch Wellungen des Halterungsabschnitts 6 und eine Verbindung des Halterungsabschnitts 6 mit dem - eventuell auch gewellt ausgebildeten - Führungsabschnitt 9 über eine Krümmung vorhanden sind).

Der Führungsabschnitt 9 weist von den im gleichen Bereich der Längserstreckung der Längsmittelachse 4 liegenden inneren Rändern 2 der Membranen 1 vorzugsweise einen Abstand auf, der mehr als den fünffachen Wert der Blechdicke des Führungsabschnitts 9 beträgt.

In diesem Ausführungsbeispiel der Erfindung erfolgt die Verbindung zwischen dem Halterungsabschnitt 6 und dem Führungsabschnitt 9 über eine materialeinstückige Ausbildung. Das Führungsteil 5 ist hierbei insgesamt materialeinstückig ausgebildet. Grundsätzlich könnten der Halterungsabschnitt 6 und der Führungsabschnitt 9 auch durch stoffschlüssig miteinander verbundene Teile ausgebildet werden, vgl. auch das weiter unten beschriebene dritte Ausführungsbeispiel.

Eine Mittelebene durch den Halterungsabschnitt 6 könnte so definiert werden, dass es sich um die Ebene handelt, für welche das Flächenintegral der Abstandsquadrate der Punkte des Halterungsabschnitts 6 von dieser Ebene ein Minimum annimmt. Eine solche Mittelebene des Halterungsabschnitts 6 schließt vorzugsweise mit der Längsmittelachse 4 einen Winkel von mindestens 70°, vorzugsweise einen Winkel von 90° ein.

Wenn man sich im Längsmittelschnitt gesehen ausgehend vom beim äußeren Rand des Führungsteils liegenden Ende des Führungsteils in Richtung zum inneren Ende (oder, in einem anderen Ausführungsbeispiel, einem der inneren Enden) des Führungsteils bewegt, so könnte das innere Ende des Halterungsabschnitts 6 an der Stelle definiert werden, an welcher der Winkel zwischen einer an den Halterungsabschnitt 6 angelegten Tangente und der Längsmittelachse 4 kleiner als 45° wird. Der Beginn des Führungsabschnitts 9 könnte dort angesetzt werden, wo die an das Führungsteil 5 angelegte Tangente erstmals parallel zur Längsmittelachse 4 liegt. Zwischen dem inneren Ende des Halterungsabschnitts 6 und dem Beginn des Führungsabschnitts 9 würde sich damit ein kurzer, gekrümmter Übergangsabschnitt befinden.

Der Membranbalg wird in vielen Anwendungsfällen länger ausgebildet sein, als in Fig. 1 und 2 dargestellt. Die Ausbildung und Verbindung der übrigen Membrane 1 kann hierbei gleich wie im dargestellten Abschnitt sein. Je nach Länge des Membranbalgs können günstigerweise weitere Führungsteile 5 vorhanden sein. In axialer Richtung aufeinanderfolgende Führungsteile 5 sind hierbei derart angeordnet, dass sie auch im vollständig komprimierten Zustand des Membranbalgs noch in axialer Richtung der Längsmittelachse 4 voneinander beabstandet sind.

An den an den beiden axialen Enden des Membranbalgs liegenden Membranen 1 können Endstücke angeschweißt sein, insbesondere in Form von genormten Flanschen.

Die Fig. 11 bis 13 zeigen die Anwendung eines Membranbalgs gemäß der ersten Ausführungsform der Erfindung für eine Vakuumdurchführung. Die Stange 10 durchsetzt die innere Durchgangsöffnung 11 des Membranbalgs. An einem Ende ist an der Stange 10 ein Anschlussstück 12 angebracht, welches mit dem äußeren Rand 3 einer endseitigen Membran 1 des Membranbalgs verschweißt ist. Die Stange 10 ragt in Richtung zu ihrem anderen Ende durch eine Durchtrittsöffnung 13 eines weiteren Anschlussstücks 14. Der äußere Rand 3 der anderen endseitigen Membran 1 ist mit dem Anschlussstück 14 verschweißt. Beim Anschlussstück 14 kann es sich beispielsweise um einen Flansch handeln, der vakuumdicht mit einem anderen Teil einer Vakuumeinrichtung verbunden werden kann, beispielsweise einem Vakuumventil. Wenn kein einfacher Austausch der den Membranbalg aufweisenden Einheit gewünscht ist, könnte die Verschweißung dieser endseitigen Membran 1 auch direkt mit einem entsprechenden Teil einer Vakuumeinrichtung erfolgen. Das Anschlussstück 12 könnte auch entfallen und es könnte eine letzte Membran 1 vorgesehen sein, welche mit ihrem äußeren Rand mit der benachbarten Membran verschweißt ist und einen inneren Rand aufweist, der die inneren Ränder der anderen Membranen in Richtung zur Längsmittelachse 4 überragt und direkt an der Stange 10 angeschweißt ist.

Aus Fig. 12 ist ersichtlich, dass der hier gezeigte Membranbalg zwei Führungsteile 5 aufweist. Der Führungsabschnitt 9 eines jeweiligen Führungsteils 5 umgibt die Stange 10 mit Spiel zur Ausbildung einer Gleitführung. Vorzugsweise liegt das Spiel im Bereich 0,02 bis 1mm, besonders bevorzugt 0,02 bis 0,2mm.

Zur Herstellung des Membranbalgs werden in bekannter Weise zuerst Paare von an ihren inneren Rändern 2 miteinander verschweißten Membranen 1 gebildet. In den Fig. 14 bis 16 sind zwei solche Paare dargestellt. In den Bereichen abseits der Führungsteile 5 werden die so gebildeten Paare in bekannter Weise aneinandergereiht und an ihren äußeren Rändern 7 miteinander verschweißt. Wo ein Führungsteil 5 im Membranbalg angeordnet werden soll, wird dieses zwischen zwei solche Membranpaare eingelegt, vgl. Fig. 14 bis 16. In der Folge werden die äußeren Ränder des Führungsteils 5 und der dem Führungsteil 5 benachbarten Membrane 1 aneinander angelegt und miteinander verschweißt.

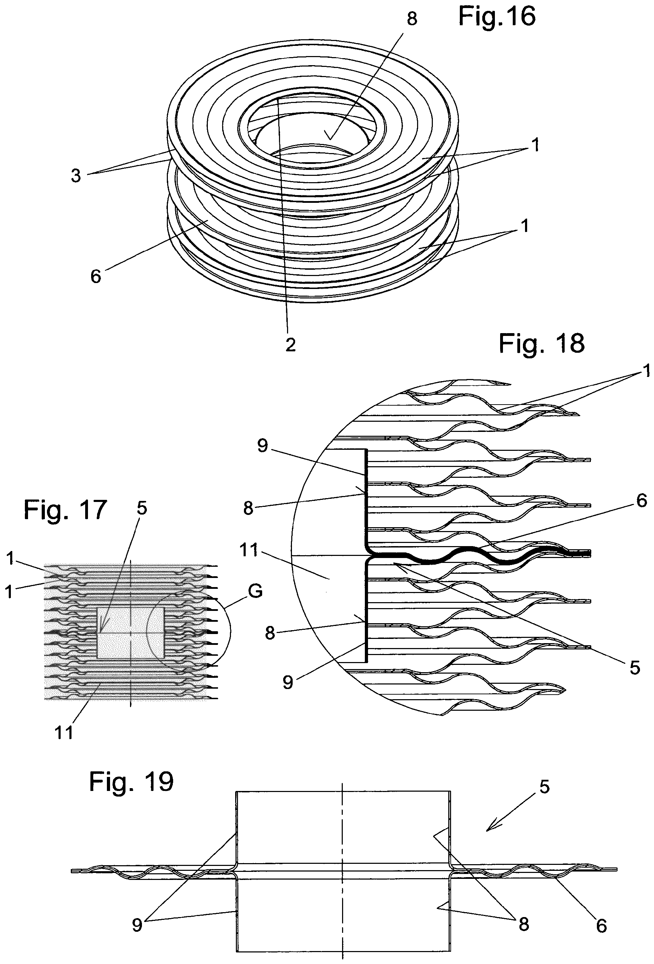

Ein zweites Ausführungsbeispiel der Erfindung ist in den Fig. 17 bis 19 dargestellt. Der Membranbalg gemäß diesem zweiten Ausführungsbeispiel entspricht abgesehen von den im Folgenden beschriebenen Unterschieden dem Membranbalg des ersten Ausführungsbeispiels.

Das Führungsteil 5 ist in diesem Ausführungsbeispiel zweiteilig ausgebildet. Die Ausbildung des ersten Einzelteils entspricht der Ausbildung des Führungsteils des ersten Ausführungsbeispiels. Das zweite Einzelteil ist im Bereich des Halterungsabschnitts 6 gleich wie das erste Einzelteil ausgebildet. Der vom zweiten Einzelteil ausgebildete Teil des Führungsabschnitts erstreckt sich aber in die entgegengesetzte axiale Richtung wie der vom ersten Einzelteil ausgebildete Teil des Führungsabschnitts. Die beiden Einzelteile werden aneinander angelegt, sodass sie im Bereich des Halterungsabschnitts 6 flächig aneinander anliegen und zusammen den Halterungsabschnitt 6 des Führungsteils 9 bilden. Sie können hierbei in diesem Bereich miteinander verschweißt sein. Das so ausgebildete Führungsteil 5 wird in analoger Weise wie beim ersten Ausführungsbeispiel beschrieben zwischen zwei Membrane 1 eingesetzt und die äußeren Ränder 3, 7 der Membrane 1 und des Führungsteils 5 werden miteinander verschweißt.

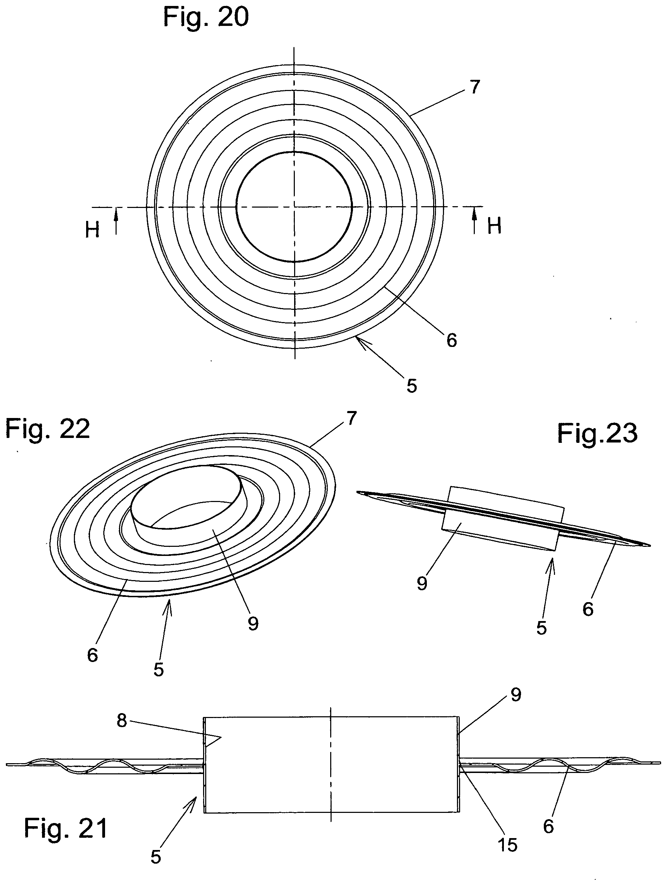

Ein drittes Ausführungsbeispiel wird im Folgenden anhand der Fig. 20 bis 23 erläutert. Abgesehen von den im Folgenden beschriebenen Unterschieden entspricht die Ausbildung des dritten Ausführungsbeispiels derjenigen des ersten Ausführungsbeispiels.

Der Unterschied besteht wiederum in der Ausbildung des Führungsteils 5. Der Halterungsabschnitt 6 und der Führungsabschnitt 9 werden hier von separaten Teilen gebildet, die miteinander verschweißt sind. Der Halterungsabschnitt 6 entspricht in seiner Kontur im Wesentlichen dem Halterungsabschnitt des Führungsteils des ersten Ausführungsbeispiels und ist an seinem inneren Rand mit dem Führungsabschnitt 9 verschweißt, der hier von einem hülsenförmig ausgebildeten Teil gebildet wird, welches auch als "dünnwandiges Rohrstück" bezeichnet werden könnte. Die Verschweißung 15, die in Fig. 21 angedeutet ist, erfolgt günstigerweise in einem axial mittleren Bereich dieses Teils.

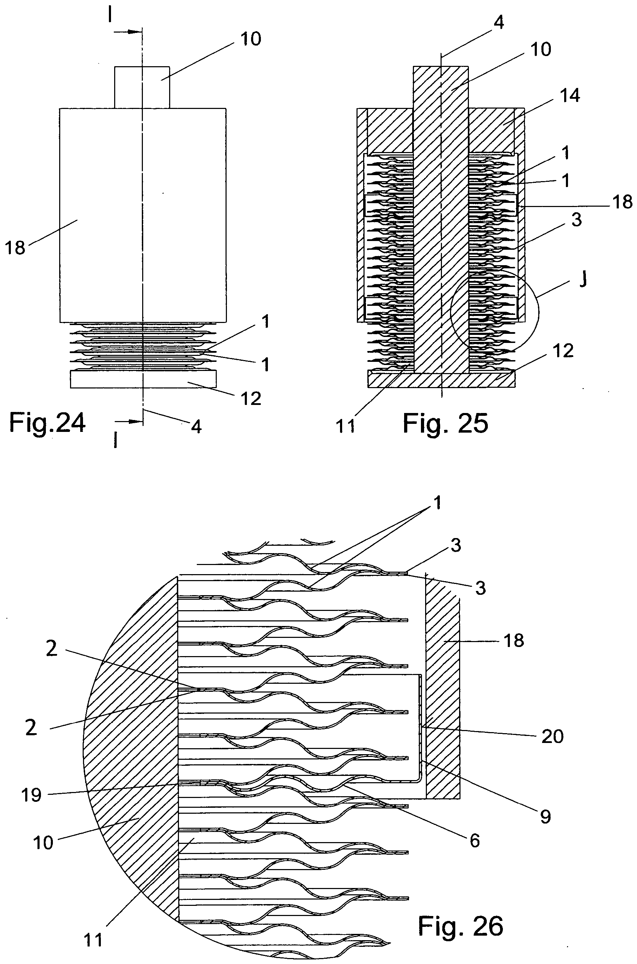

Die Fig. 24 bis 26 zeigen eine Einrichtung, welche ein viertes Ausführungsbeispiel eines erfindungsgemäßen Membranbalgs aufweist. Im Weiteren sind an den beiden Enden des Membranbalgs angeschweißte Anschlussstücke 12, 14 und ein den Membranbalg umgebendes Rohr 18 dargestellt, über welches eine Führung des Membranbalgs zur Verhinderung eines seitlichen Ausknickens des Membranbalgs erfolgt.

Abgesehen von den im Folgenden beschriebenen Unterschieden entspricht die Ausbildung des Membranbalgs derjenigen des ersten Ausführungsbeispiels.

Der Führungsabschnitt 9 eines jeweiligen Führungsteils 5 liegt hier auf der Außenseite des Membranbalgs und die Außenfläche des Führungsabschnitts bildet eine Führungsfläche 8 des Führungsteils 5, welche mit der Innenwand des ihn umgebenden Rohrs 18 zusammenwirkt. Der Führungsabschnitt 9 ist mit einem Halterungsabschnitt 6 verbunden. Der innere Rand 19 des Halterungsabschnitts 6, welcher gleichzeitig den inneren Rand des Führungsteils 5 bildet, liegt zwischen den inneren Rändern 2 der beiden dem Führungsteil 5 benachbarten Membrane 1 und die inneren Ränder 2, 19 dieser Membrane 1 und des dazwischenliegenden Führungsteils 5 sind miteinander verschweißt. Der Halterungsabschnitt 6 entfernt sich also ausgehend von seinem inneren Rand 19, an dem er mit den inneren Rändern 2 der benachbarten Membranen 1 verschweißt ist, in Richtung zur Führungsfläche 20 des Führungsteils 5 von der Längsmittelachse 4 und überragt die äußeren Ränder 3 der benachbarten Membrane 1 in eine von der Längsmittelachse 4 des Membranbalgs wegweisende Richtung. Der Halterungsabschnitt 6 ist hierbei mit dem weiter als die äußeren Ränder 3 der Membranen 1 von der Längsmittelachse 4 des Membranbalgs entfernt liegenden Führungsabschnitt 9 verbunden.

Auch in dieser Ausführungsvariante der Erfindung, bei welcher die Führung auf der inneren Oberfläche eines den Membranbalg umgebenden Rohrs 18 erfolgt, sind unterschiedliche Modifikationen des Führungsteils 5 denkbar und möglich, beispielsweise analog zu den zuvor beschriebenen Modifikationen entsprechend der zweiten und dritten Ausführungsform.

Das Rohr 18 ist im in den Fig. 24 bis 26 gezeigten Ausführungsbeispiel am Anschlussstück 14 angebracht, könnte aber auch in anderer Weise festgelegt sein.

Das in den Fig. 24 bis 26 dargestellte Ausführungsbeispiel dient wiederum als Vakuumdurchführung zur Übertragung einer Bewegung einer Stange 10, die die innere Durchgangsöffnung 11 des Membranbalgs durchsetzt, in einen Vakuumbereich. Die Stange 10 ist hierbei mit dem Anschlussstück 12 verbunden, wobei aber das Anschlussstück 12 wiederum entfallen und der Membranbalg direkt an der Stange 10 angeschweißt sein könnte.

In anderen Ausführungsbeispielen könnte die Stange 10 auch entfallen und die Durchgangsöffnung 11 beispielsweise als Verbindung zwischen zwei Vakuumkammern, z.B. zum Durchtritt von Gegenständen vorgesehen sein. Durch die Führung am Rohr 18 wird hierbei ein Abknicken des Membranbalgs verhindert.

### Legende zu den Hinweisziffern:

- 1: Membran
- 2: innerer Rand
- 3: äußerer Rand
- 4: Längsmittelachse
- 5: Führungsteil
- 6: Halterungsabschnitt
- 7: äußerer Rand
- 8: Führungsfläche
- 9: Führungsabschnitt
- 10: Stange
- 11: Durchgangsöffnung
- 12: Anschlussstück
- 13: Durchtrittsöffnung
- 14: Anschlussstück
- 15: Verschweißung
- 18: Rohr
- 19: innerer Rand
- 20: Führungsfläche

## Patentansprüche

1. Membranbalg mit einer Mehrzahl von Membranen (1) mit äußeren Rändern (3) und inneren Rändern (2), wobei in Richtung der Längsmittelachse (4) des Membranbalgs aufeinanderfolgende Membrane (1) wechselweise im Bereich ihrer inneren Ränder (2) und im Bereich ihrer äußeren Ränder (3) miteinander verschweißt sind, wobei der Membranbalg im Weiteren mindestens ein Führungsteil (5) zur Führung auf der äußeren Oberfläche einer eine innere Durchgangsöffnung (11) des Membranbalgs durchsetzenden Stange (10) aufweist, **dadurch gekennzeichnet, dass** das mindestens eine Führungsteil (5) aus Blech ausgebildet ist und einen Halterungsabschnitt (6) aufweist, der im Bereich eines äußeren Randes (7) zwischen benachbarten Membranen (1) des Membranbalgs liegt und mit diesen benachbarten Membranen (1) verschweißt ist und dessen Dicke weniger als die fünffache Dicke der Membrane (1) beträgt, zwischen denen er angeordnet ist, wobei sich der Halterungsabschnitt (6) ausgehend von seinem äußeren Rand (7) der Längsmittelachse (4) des Membranbalgs annähert und die inneren Ränder (2) dieser benachbarten Membrane (1) in Richtung zur Längsmittelachse (4) des Membranbalgs überragt und mit einem näher als die inneren Ränder (2) dieser benachbarten Membrane (1) bei der Längsmittelachse (4) des Membranbalgs liegenden Führungsabschnitt (9) zur Führung auf der äußeren Oberfläche des die innere Durchgangsöffnung (11) des Membranbalgs durchsetzenden Stange (10) verbunden ist, wobei der Führungsabschnitt (9) die Längsmittelachse (4) hülsenförmig umgibt.

2. Membranbalg mit einer Mehrzahl von Membranen (1) mit äußeren Rändern (3) und inneren Rändern (2), wobei in Richtung der Längsmittelachse (4) des Membranbalgs aufeinanderfolgende Membrane (1) wechselweise im Bereich ihrer inneren Ränder (2) und im Bereich ihrer äußeren Ränder (3) miteinander verschweißt sind, wobei der Membranbalg im Weiteren mindestens ein Führungsteil (5) zur Führung auf der inneren Oberfläche eines den Membranbalg umgebenden Rohrs (18) aufweist, **dadurch gekennzeichnet, dass** das mindestens eine Führungsteil (5) aus Blech ausgebildet ist und einen Halterungsabschnitt (6) aufweist, der im Bereich eines inneren Randes (19) zwischen benachbarten Membranen (1) des Membranbalgs liegt und mit diesen benachbarten Membranen (1) verschweißt ist und dessen Dicke weniger als die fünffache Dicke der Membrane (1) beträgt, zwischen denen er angeordnet ist, wobei sich der Halterungsabschnitt (6) ausgehend von seinem inneren Rand (19) von der Längsmittelachse (4) des Membranbalgs entfernt und die äußeren Ränder (3) dieser benachbarten Membrane (1) in eine von der Längsmittelachse (4) des Membranbalgs wegweisende Richtung überragt und mit einem weiter als die äußeren Ränder (3) dieser benachbarten Membrane (1) von der Längsmittelachse (4) des Membranbalgs entfernt liegenden Führungsabschnitt (9) zur Führung auf der inneren Oberfläche des den Membranbalg umgebenden Rohrs (18) verbunden ist, wobei der Führungsabschnitt (9) die Längsmittelachse (4) hülsenförmig umgibt.

3. Membranbalg nach Anspruch 1 oder 2, **dadurch gekennzeichnet, dass** die Dicke des Halterungsabschnitts (6) des Führungsteils (5) weniger als die dreifache Dicke der Membrane (1) beträgt, zwischen denen der Halterungsabschnitt (6) des Führungsteils (5) angeordnet ist.

4. Membranbalg nach einem der Ansprüche 1 bis 3, **dadurch gekennzeichnet, dass** die Dicke des Führungsabschnitts (9) des Führungsteils (5) weniger als die fünffache Dicke der Membrane (1) beträgt, zwischen denen der Halterungsabschnitt (6) des Führungsteils (5) angeordnet ist, mit welchem der Führungsabschnitt (9) verbunden ist.

5. Membranbalg nach Anspruch 4, **dadurch gekennzeichnet, dass** die Dicke des Führungsabschnitts (9) des Führungsteils (5) weniger als die dreifache Dicke der Membrane (1) beträgt, zwischen denen der Halterungsabschnitt (6) des Führungsteils (5) angeordnet ist, mit welchem der Führungsabschnitt (9) verbunden ist.

6. Membranbalg nach einem der Ansprüche 1 bis 5, **dadurch gekennzeichnet, dass** der Führungsabschnitt (9) mit dem Halterungsabschnitt (6) oder zumindest einem Einzelteil des Halterungsabschnitts (6) materialeinstückig ausgebildet ist oder mit dem Halterungsabschnitt (6) stoffschlüssig verbunden ist.

7. Membranbalg nach einem der Ansprüche 1 bis 6, **dadurch gekennzeichnet, dass** die beidseitig des Halterungsabschnitts (6) des Führungsteils (5) liegenden Membrane (1) und der Halterungsabschnitt (6) im vollständig zusammengedrückten Zustand des Membranbalgs flächig aneinander anliegen.

8. Membranbalg nach einem der Ansprüche 1 bis 7, **dadurch gekennzeichnet, dass** der Führungsabschnitt (9) des Führungsteils (5) eine zentrale Öffnung aufweist, deren Durchmesser mindestens 80% des Durchmessers der zentralen Öffnungen der beidseitig des Halterungsabschnitts (6) des Führungsteils (5) liegenden Membrane (1) beträgt.

9. Membranbalg nach einem der Ansprüche 1 bis 8, **dadurch gekennzeichnet, dass** der Membranbalg mehr als ein Führungsteil (5) aufweist, wobei aufeinanderfolgende Führungsteile (5) auch im vollständig komprimierten Zustand des Membranbalgs in axialer Richtung der Längsmittelachse (4) des Membranbalgs voneinander beabstandet sind.

## Claims

1. A diaphragm bellows having a plurality of diaphragms (1) with outer edges (3) and inner edges (2), wherein diaphragms (1) successive in the direction of the longitudinal central axis (4) of the diaphragm bellows are welded to one another alternately in the region of their inner edges (2) and the region of their outer edges (3), wherein the diaphragm bellows furthermore has at least one guide part (5) for guiding on the outer surface of a bar (10) passing through an inner through opening (11) of the diaphragm bellows, **characterised in that** the at least one guide part (5) is constructed of sheet metal and has a support portion (6) which in the region of an outer edge (7) lies between adjacent diaphragms (1) of the diaphragm bellows and is welded to these adjacent diaphragms (1) and whose thickness amounts to less than five times the thickness of the diaphragms (1) between which it is arranged, wherein issuing from its outer edge (7), the support portion (6) approaches the longitudinal central axis (4) of the diaphragm bellows and projects beyond the inner edges (2) of these adjacent diaphragms (1) in the direction of the longitudinal central axis (4) of the diaphragm bellows and is connected to a guide portion (9), for guiding on the outer surface of the bar (10) passing through the inner through opening (11) of the diaphragm bellows, lying closer to the longitudinal central axis (4) of the diaphragm bellows than the inner edges (2) of these adjacent diaphragms (1), wherein the guide portion (9) surrounds the longitudinal central axis (4) in a sleeve-shaped manner.

2. A diaphragm bellows having a plurality of diaphragms (1) with outer edges (3) and inner edges (2), wherein diaphragms (1) successive in the direction of the longitudinal central axis (4) of the diaphragm bellows are welded to one another alternately in the region of their inner edges (2) and the region of their outer edges (3), wherein the diaphragm bellows furthermore has at least one guide part (5) for guiding on the inner surface of a pipe (18) surrounding the diaphragm bellows, **characterised in that** the at least one guide part (5) is constructed of sheet metal and has a support portion (6) which in the region of an inner edge (19) lies between adjacent diaphragms (1) of the diaphragm bellows and is welded to these adjacent diaphragms (1) and whose thickness amounts to less than five times the thickness of the diaphragms (1) between which it is arranged, wherein issuing from its inner edge (19), the support portion (6) is remote from the longitudinal central axis (4) of the diaphragm bellows and projects beyond the outer edges (3) of these adjacent diaphragms (1) in a direction away from the longitudinal central axis (4) of the diaphragm bellows and is connected to a guide portion (9), for guiding on the inner surface of the pipe (18) surrounding the diaphragm bellows, lying further remote from the longitudinal central axis (4) of the diaphragm bellows than the outer edges (3) of these adjacent diaphragms (1), wherein the guide portion (9) surrounds the longitudinal central axis (4) in a sleeve-shaped manner.

3. A diaphragm bellows according to claim 1 or 2, **characterised in that** the thickness of the support portion (6) of the guide part (5) amounts to less than three times the thickness of the diaphragms (1) between which the support portion (6) of the guide part (5) is arranged.

4. A diaphragm bellows according to any one of claims 1 to 3, **characterised in that** the thickness of the guide portion (9) of the guide part (5) amounts to less than five times the thickness of the diaphragms (1) between which the support portion (6) of the guide part (5) is arranged, to which support portion (6) there is connected the guide portion (9).

5. A diaphragm bellows according to claim 4, **characterised in that** the thickness of the guide portion (9) of the guide part (5) amounts to less than three times the thickness of the diaphragms (1) between which the support portion (6) of the guide part (5) is arranged, to which support portion (6) there is connected the guide portion (9).

6. A diaphragm bellows according to any one of claims 1 to 5, **characterised in that** the guide portion (9) is formed integral with the support portion (6) or at least with an individual part of the support portion (6) or is connected to the support portion (6) in a material-bonded manner.

7. A diaphragm bellows according to any one of claims 1 to 6, **characterised in that** the diaphragms (1) lying both sides of the support portion (6) of the guide part (5) and the support portion (6) rest flat against one another in the completely pressed-together state of the diaphragm bellows.

8. A diaphragm bellows according to any one of claims 1 to 7, **characterised in that** the guide portion (9) of the guide part (5) has a central opening whose diameter amounts to at least 80% of the diameter of the central openings of the diaphragms (1) lying on both sides of the support portion (6) of the guide part (5).

9. A diaphragm bellows according to any one of claims 1 to 8, **characterised in that** the diaphragm bellows has more than one guide part (5), wherein also in the fully compressed state of the diaphragm bellows, successive guide parts (5) are at a distance from one another in the axial direction of the longitudinal central axis (4) of the diaphragm bellows.

## Revendications

1. Soufflet à membranes comprenant un ensemble de membranes (1) ayant des bords externes (3) et des bords internes (2), des membranes (1) successives dans la direction de l'axe longitudinal médian (4) du soufflet à membranes étant alternativement soudées les unes aux autres dans la zone de leurs bords internes (2) et dans la zone de leurs bords externes (3), le soufflet à membranes comprenant en outre au moins une pièce (5) de guidage sur sa surface externe d'une tige (10) traversant une ouverture de passage (11) du soufflet à membranes, **caractérisé en ce que**
la pièce de guidage (5) est réalisée en tôle et comporte un segment de retenue (6) qui est situé dans la zone d'un bord externe (7) entre des membranes (1) voisines du soufflet à membranes, est soudé à ces membranes (1), et dont l'épaisseur est inférieure à cinq fois l'épaisseur des membranes (1) entre lesquelles il est positionné, le segment de retenue (6) se rapprochant à partir de son bord externe (7) de l'axe longitudinal médian (4) du soufflet à membranes, dépassant des bords internes (2) des membranes (1) voisines en direction de l'axe longitudinal médian (4) du soufflet à membranes et étant relié à un segment (9) plus proche que les bords internes (2) des membranes voisines (1) de l'axe longitudinal médian (4) du soufflet à membranes de guidage sur la surface externe de la tige (10) traversant l'ouverture de passage (11) du soufflet à membranes, le segment de guidage (9) entourant l'axe longitudinal médian (4) en forme de manchon.

2. Soufflet à membranes comprenant un ensemble de membranes (1) ayant des bords externes (3) et des bords internes (2), des membranes (1) successives dans la direction de l'axe longitudinal médian (4) du soufflet à membranes étant alternativement soudées les unes aux autres dans la zone de leurs bord internes (2) et dans la zone de leurs bords externes (3), le soufflet à membranes comprenant en outre au moins une pièce (5) de guidage sur sa surface interne d'un tube (18) entourant le soufflet à membranes,
**caractérisé en ce que**
la pièce de guidage (5) est réalisée en tôle et comporte un segment de retenue (6) qui est situé dans la zone d'un bord interne (19) entre des membranes (1) voisines du soufflet à membranes est soudé à ces membranes (1), et dont l'épaisseur est inférieure à cinq fois l'épaisseur des membranes (1) entre lesquelles il est positionné, le segment de retenue (6) s'éloignant à partir de son bord interne (19) de l'axe longitudinal médian (4) du soufflet à membranes, dépassant des bords externes (3) des membranes voisines (1) dans une direction s'éloignant de l'axe longitudinal médian (4) du soufflet à membranes, et étant relié à un segment (9) plus éloigné que les bords externes (3) des membranes voisines (1) de l'axe longitudinal médian (4) du soufflet à membranes de guidage sur sa surface interne du tube (18) entourant le soufflet à membranes, le segment de guidage (9) entourant l'axe longitudinal médian (4) en forme de manchon.

3. Soufflet à membranes conforme à la revendication 1 ou 2, **caractérisé en ce que**
l'épaisseur du segment de retenue (6) de la pièce de guidage (5) est égale à moins de trois fois l'épaisseur des membranes (1) entre lesquelles est situé le segment de retenue (6) de la pièce de guidage (5).

4. Soufflet à membranes conforme à l'une des revendications 1 à 3, **caractérisé en ce que**
l'épaisseur du segment de guidage (9) de la pièce de guidage (5) est égale à moins de cinq fois l'épaisseur des membranes (1) entre lesquelles est situé le segment de retenue (6) de la pièce de guidage (5), avec lequel est relié le segment de guidage (9).

5. Soufflet à membranes conforme à la revendication 4,
**caractérisé en ce que**
l'épaisseur du segment de guidage (9) de la pièce de guidage (5) est égale à moins de trois fois l'épaisseur des membranes (1) entre lesquelles est situé le segment de retenue (6) de la pièce de guidage (5) avec lequel est relié le segment de guidage (9).

6. Soufflet à membranes conforme à l'une des revendications 1 à 5, **caractérisé en ce que**
les segment de guidage (9) est réalisé en une seule pièce de matière avec le segment de retenue (6) ou au moins une partie du segment de retenue (6), ou est reliée par une liaison par la matière avec le segment de retenue (6).

7. Soufflet à membranes conforme à l'une des revendications 1 à 6, **caractérisé en ce que**
les membranes (1) situées de chaque côté du segment de retenue (6) de la pièce de guidage (5) et le segment de retenue (6) s'appliquent à plat les uns contre les autres à l'état totalement replié du soufflet à membranes.

8. Soufflet à membranes conforme à l'une des revendications 1 à 7, **caractérisé en ce que**
le segment de guidage (9) de la pièce de guidage (5) comporte une ouverture centrale dont le diamètre est égal à au moins 80% du diamètre de l'ouverture centrale des membranes (1) situées de part et d'autre du segment de retenue (6) de la pièce de guidage (5).

9. Soufflet à membranes conforme à l'une des revendications 1 à 8, **caractérisé en ce qu'**
il comporte plus d'une pièce de guidage (5), les pièces de guidage (5) successives étant également situées à distance les unes des autres à l'état totalement replié du soufflet à membranes, dans la direction axiale de l'axe longitudinal médian (4) de ce soufflet à membranes.
